# EUROPÄISCHE PATENTSCHRIFT

(11) **EP 1 311 387 B1**
(45) Veröffentlichungstag und Bekanntmachung des Hinweises auf die Patenterteilung: **27.10.2004**
(21) Anmeldenummer: 01980271.9
(22) Anmeldetag: 24.08.2001
(51) Int. Cl.: B32B 15/00, E04B 1/64, E04D 5/10, F16L 59/08, B32B 27/32

(54) **ABSCHIRMENDE THERMOREFLEXIONSFOLIE FÜR DEN BAUBEREICH, SPEZIELL ALS UNTERSPANNBAHN**
PROTECTIVE HEAT REFLECTIVE FILM FOR THE CONSTRUCTION INDUSTRY, ESPECIALLY USED AS AN INNER LINING
PELLICULE DE THERMOREFLEXION DE PROTECTION DESTINEE AU DOMAINE DU BATIMENT, SERVANT NOTAMMENT DE BANDE DE REVETEMENT INTERIEUR

(30) Priorität: 24.08.2000 DE 10041526
(43) Veröffentlichungstag der Anmeldung: 21.05.2003
(73) Patentinhaber: Küchenmeister Anlagenbau GmbH, 20097 Hamburg (DE); Kobusch Folien GmbH + Co. KG, D-34414 Warburg (DE)
(72) Erfinder: KÜCHENMEISTER, Berndt, 22941 - Delingsdorf (DE); VAHLE, Erwin, 34414 Warburg (DE)
(74) Vertreter: von Samson-Himmelstjerna, Friedrich R., Dipl.-Phys.
(86) Internationale Anmeldenummer: PCT/EP2001/009809
(87) Internationale Veröffentlichungsnummer: WO 2002/016127

(56) Entgegenhaltungen:
- DE-A- 2 855 484
- DE-A- 3 015 387
- DE-A- 3 918 104
- GB-A- 1 490 250
- NL-C- 1 009 983
- US-A- 3 934 066
- US-A- 4 421 807
- US-A- 5 151 095

## Beschreibung

Die Erfindung betrifft eine abschirmende Thermoreflexionsfolie für den Baubereich, speziell als Unterspannbahn, und ein Verfahren zu ihrer Herstellung.

Ein Dach soll das Gebäude und seine Bewohner vor vielfältigen Umwelteinflüssen und Belastungen schützen. Waren Dächer früher lediglich Schutzschilde gegen Regen, Schnee, Hagel, Wind und direkte Sonneneinstrahlung, so werden heute vom Dach noch zusätzliche Aufgaben, wie die Regulierung eines behaglichen Raumklimas und die Verringerung des Heizbedarfs oder Kühlbedarfs unter Optimierung der Energiekosten verlangt.

Es ist in Zukunft damit zu rechnen, dass in vielen Ländern Gesetze beschlossen werden, um das Energiesparpotential bei Gebäuden auszuschöpfen. Die zwei wichtigsten Gründe für Niedrigenergiehäuser sind:
1. Die Europäische Kommission hat erkannt, dass Gebäude für 40% der gesamten Kohlendioxid-Emissionen verantwortlich sind;
2. Bei der Weltklimakonferenz hat sich die Mehrzahl aller Länder dazu verpflichtet, vordefinierte Abgasgrenzen bis zum Jahr 2010 nicht zu überschreiten.

Es entspricht der zukünftigen dritten Energiesparverordnung, modernen Niedrigenergiebau zwingend vorzuschreiben, um Einsparungen von 25 - 30% des gegenwärtigen Energieverbrauchs erzielen zu können.

Weiter ist in vielen Kreisen der Bevölkerung ein Bedarf an Schutz vor elektromagnetischen Einflüssen und Belastungen vorhanden, die durch den Einzug der Elektronik in immer breitere Bereiche des Alltags ständig zunehmen. Dabei geht es nicht um sicherheitsrelevante Installationen, sondern um die Abschirmung von "Elektrosmog" in Ein- und Mehrfamilienhäusern.

Ein anderes wichtiges Gebiet beim,Dachbau ist der Holzschutz. Es ist heute erwünscht, nicht nur in Aufenthaltsräumen, sondern auch bei tragenden Teilen in Außenbauteilen mit Wetterschutz, z.B. bei Dächern, auf einen chemischen Holzschutz zu verzichten.

Gemäß DIN 68 800-2 kann bei geneigten Dächern auf chemische Holzschutzmittel bei den Sparren (den tragenden Teilen des Dachs) verzichtet werden, wenn:
1. eine Sparrenvolldämmung gewählt wird, in der der ganze Leerraum zwischen den Sparren ("Gefach") mit mineralischen Faserdämmstoffen ausgefüllt ist, oder bei der Teildämmumg der im Gefach vorhandene Hohlraum unbelüftet und insektenundurchlässig (gegen Hausbockbefall) abgedeckt ist und
2. eine diffusionsoffene Unterspannbahn mit einem Diffusionswiderstand (diffusionsäquivalente Luftschichtdicke) s_{d} = 0,2 m verwendet wird. Dies dient dazu, eine ungewollt erhöhte Feuchte über ein größeres Verdunstungsvermögen derart schnell wieder abzugeben, daß ein schädliches Pilzwachstum auf dem chemisch nicht geschützten Holz vermieden wird; und gegebenenfalls
3. auf der Raumseite der Dachkonstruktion eine winddichte Wasserdampfbremse (diffusionsgeschlossene Folie) aufgebracht ist.

Bei Flachdächern hingegen ist oberhalb des tragenden Bauteilquerschnitts eine aufliegende Dämmschicht und Dampfsperre (diffusionsgeschlossene Unterspannbahn) erforderlich, damit auf den Einsatz eines Holzschutzmittels verzichtet werden kann.

Es sind einige diffusionsoffene Unterspannbahnen im Stand der Technik bekannt. Diese bestehen beispielsweise aus Polyethylen hoher Dichte (HDPE), HDPE/Polypropylen, Polypropylen-Vlies mit wasserdichter, diffusionsoffener Polypropylenbeschichtung und Polyester-Vlies mit Polyurethanbeschichtung. Im Dachbau eingesetzte diffusionsgeschlossene Folien bestehen meist aus Polyethylen oder Polyamid.

In der DE 28 55 484 A ist eine diffusionsgeschlossene Verbundfolie beschrieben, die als Dachabdeckung verwendet werden kann. Ihre innere Schicht kann aus Hochdruck-Polyethylen bestehen kann und ist einseitig oder beidseitig mit einer Aluminiumfolie klebekaschiert. Derartige kaschierte Folien weisen jedoch bei der Verwendung im Dachbau Nachteile auf, da dort Folien typisch mit Nägeln am Dachgebälk befestigt werden. Bei einer kaschierten Folie kann an den dadurch erzeugten Löchern in der Folie Feuchtigkeit in die Kaschierschicht eindringen, was zu einer Verminderung des Folienverhaltens und zur Alterung der Folie führt. Weiter ist eine derartige Folie auch rißempfindlich und gegen Verformung durch Wärmeeinstrahlung nicht beständig.

Diese Unterspannbahnen des Standes der Technik sind insbesondere im Hinblick auf die Reflexion von Wärmestrahlung, also Wärmeisolation, als auch auf die oben erwähnte, heute vielfach gewünschte elektromagnetische Abschirmung bei gleichzeitig guten mechanischen und Alterungseigenschaften zu verbessern. Dies hat sich die vorliegende Erfindung als Aufgabe gestellt.

Diese Aufgabe wird durch die Thermoreflexionsfolie des Anspruchs 1 sowie das Verfahren zu ihrer Herstellung des Anspruchs 22 gelöst.

Die erfindungsgemäße Thermoreflexionsfolie ist ein moderner Hochtechnologie-Baustoff, der für die Bewohner eines Gebäudes ein gesünderes Wohnen ermöglicht und außerdem ein ökologisch probates Mittel zur Minderung der Kohlendioxid-Emissionen und Optimierung der Energiekosten ist.

Die erfindungsgemäße Thermoreflexionsfolie ist winddicht und wasserfest (Regen- und Schlagregen-beständig), emissionsfrei und hoch reißfest. Ferner ist die Thermoreflexionsfolie hoch UV-beständig und lichtdicht, was für ihr ausgezeichnetes Alterungsverhalten sorgt (die Lebensdauer soll mindestens 20 Jahre betragen). Ihre Wärmereflexion beträgt etwa 95% und sie ist von -45°C bis +95°C temperaturbeständig. Ihre elektromagnetischen Eigenschaften beinhalten hervorragende Abschirmungseigenschaften über einen breiten Temperatur- und Frequenzbereich.

In den Unteransprüchen sind Konkretisierungen und vorteilhafte Ausgestaltungen angegeben.

Vorteilhafterweise wird unmittelbar über den beiden Metallisierungsschichten der erfindungsgemäßen Thermoreflexionsfolie ein Schutzlack aufgetragen, der für eine physikalische Unversehrtheit und Korrosionsbeständigkeit der Folie sorgt.

Die erfindungsgemäße Thermoreflexionsfolie kann wasserdampfundurchlässig und luftundurchlässig (diffusionsgeschlossen) sein. Diese Ausführungsform ist in Form einer Unterspannbahn als Wärmereflektor und Klimaschild für klimatisierte Gebäude in subtropischen und tropischen Ländern mit starker Sonneneinstrahlung und hoher Luftfeuchtigkeit gedacht, da nicht reflektierte Wärme und warmer, durch ein Dach dringender Wasserdampf, der eine hohe Wärmekapazität aufweist, die unter dem Dach liegenden Räume aufheizen. Die Folie kann zu diesem Zweck auch vorteilhaft in der Decken- und Wandkonstruktion eingesetzt werden.

Weiter kann die diffusionsgeschlossene Thermoreflexionsfolie auch in gemäßigtem Klima über einer Dämmschicht auf einem Flachdach angebracht werden, da dort, wie oben erwähnt, oberhalb des tragenden Bauteilquerschnittes eine Dampfsperre vorgeschrieben ist, wenn ohne Holzschutzmittel gearbeitet werden soll. In diesen Fällen sollte dann möglichst auf der Raumseite von Dachsparren und Gefach eine diffusionsoffene Schicht vorliegen.

Eine zweite Variante der erfindungsgemäßen Thermoreflexionsfolie ist die diffusionsoffene Ausführungsform, die in unseren Breiten als Dachunterspannbahn bei geneigten Dächern gewählt wird. Die Diffusionsoffenheit wird erfindungsgemäß bevorzugt durch Mikroperforationen die bereitgestellt. Diese können beispielsweise durch Nadelperforation erzeugt werden. Bevorzugt wird allerdings eine Mikroperforation durch Laserstrahl, bei der sehr kleine Perforationsabmessungen (10 bis 20 µm) erzielt werden können. Diese Perforationen sorgen für Wasser- und Windundurchlässigkeit, während sie für Wasserdampf durchlässig sind. Die Laserperforation liefert weiter sehr sauber abgegrenzte Perforationsränder, wodurch die Reißfestigkeit der Folie nicht beeinträchtigt wird.

Die Thermoreflexionsfolie genügt bevorzugt der Baustoffklasse B2 nach DIN 4102/1:1998/05 (Brandverhalten von Baustoffen und Bauteilen, DIN Norm Mai 98). Wenn diese Norm erfüllt werden soll, enthält die Basisfolie einen Flammhemmer, bevorzugt auf der Basis eines bromierten Produktes und von Sb₂O₃, vorzugsweise in einer Menge von mindestens 5 - 10 Gew.-%, insbesondere mindestens 8 Gew.-%, bezogen auf das Gesamtgewicht der Basisfolie. Die Menge an Flammhemmer, der eine Dichte im Bereich von 1,0 bis 1,5 g/cm³ aufweist, in dieser bevorzugten Ausführungsform der Erfindung ist so bemessen, daß der Mittelwert für das "von-selbst-Erlöschen" der Flamme nach 15-sekündiger Beflammung an der Kante mittels eines Brenners (Vorgaben der DIN) bei 10 Sekunden liegt. Eine Migration des Flammhemmers ist auf Grund des Aufbaus und der Struktur der Folie nicht möglich.

Die Basisfolie weist bevorzugt eine Dicke von 140 µm bis 220 µm, insbesondere von 180 µm auf.

Weiter ist die Basisfolie in einer bevorzugten Ausführungsform dreilagig aufgebaut, wobei die 3 Lagen koextrudiert sind, was für ein noch besseres mechanisches Verhalten, z. B. eine noch bessere Durchstoßfestigkeit und Nagelreißfestigkeit, und noch bessere Formerhaltungseigenschaften, insbesondere bei Einwirkung von Wärme, sorgt.

Dabei umfasst die mittlere Lage der Basisfolie Polyethylen hoher Dichte (HDPE) (Dichte 0,930 - 0,960 g/cm³) allein oder zusammen mit einem Flammhemmer, beispielsweise 85 bis 95 Gew.-%, insbesondere 90 Gew.-% HDPE, bezogen auf das Gesamtgewicht der Lage, und 5 bis 15 Gew.-%, insbesondere 10 Gew.-%, bezogen auf das Gesamtgewicht der Lage, eines Flammhemmers. Diese mittlere Lage weist bevorzugt eine Dicke von 90 µm bis 130 µm auf.

Die beiden äußeren Lagen der Basisfolie umfassen bevorzugt ein Blend aus Polyethylen geringer Dichte (LDPE) (Dichte 0,924 - 0,930 g/cm³) und linearem Polyethylen geringer Dichte (LLDPE) ) (Dichte 0,918 - 0,926 g/cm³; gegebenenfalls als Copolymerisat mit einem oder mehreren Comonomeren mit längerkettigen Olefinen, z.B. Buten oder Octen, vorliegend) oder einem Metallocen-Polyethylen (Polyethylen, das mittels Metallocen-Katalyse hergestellt ist) (Dichte 0,885 - 0,924 g/cm³), beispielsweise 60 bis 80 Gew.-% LDPE und 20 bis 40 Gew.-% LLDPE oder Metallocen-Polyethylen, oder zusammen mit einem Flammhemmer beispielsweise 50 - 70 Gew.-% insbesondere 65 Gew.-%, LDPE, 25 bis 40 Gew.-%, insbesondere 30 Gew.-%, LLDPE oder Metallocen-Polyethylen und 5 bis 10 Gew.-%, insbesondere 5 Gew.-%, eines Flammhemmers, wobei alle Gewichtsprozentsätze auf das Gesamtgewicht einer äußeren Lage bezogen sind. Bevorzugt weisen die beiden äußeren Lagen jeweils eine Dicke von 25 µm bis 45 µm auf.

Die Metallisierungsschicht kann aus jedem Metall oder jeder Metalllegierung bestehen, das bzw. die unter den Herstellungsbedingungen der Metallisierungsschicht beständig ist, z.B. Kupfer, Zink, Messing, Aluminium, Silber und Gold. Aus Anforderungsgründen und Recyclinggründen wird eine Silberschicht bevorzugt, die vorzugsweise eine Dicke von mindestens 60 nm aufweist.

Als Schutzlack über der Metallisierungsschicht wird vorzugsweise ein wasser-, lösungsmittel- und witterungsbeständiger, nicht brennbarer Lack verwendet, z.B. ein Zweikomponentenlack auf der Basis von Polyurethan, das mit Isocyanat gehärtet wird. Bei einem bevorzugten Lack werden die Polyurethan-Komponente und die IsocyanatKomponente, die beide in organischem Lösungsmittel vorliegen, im Verhältnis 2 Gew.-Teile Polyurethan:1 Gew.-Teil Isocyanat gemischt und im allgemeinen in einer solchen Menge aufgetragen, dass nach Trocknen und Erwärmen zur Härtung ein Auftragsgewicht von 1,4 bis 5,0 g/m² vorliegt. Der Lack besitzt eine weitgehend kratzfeste Oberfläche und einen hohen Glanz, ist wasser-, lösungsmittelund witterungsbeständig und erfüllt die oben erwähnte Norm B2.

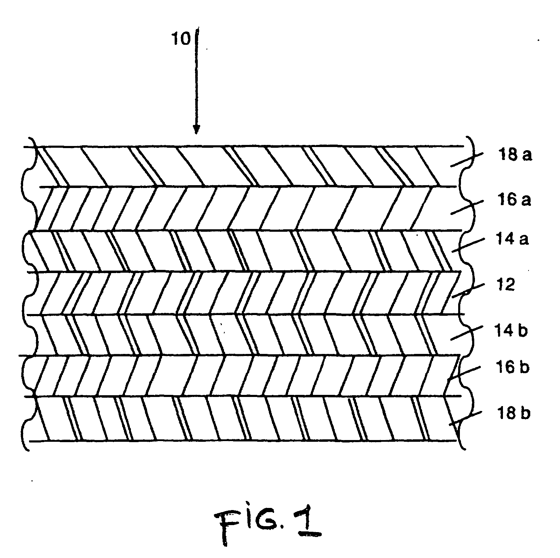

Nun wird die erfindungsgemäße Thermoreflexionsfolie anhand eines erläuternden, nicht-beschränkenden Beispiels mit Bezug auf Figur 1 näher beschrieben.

Figur 1 zeigt einen Querschnitt durch eine Thermoreflexionsfolie 10.

Die Schichten 12, 14a und 14b bilden zusammen die Basisfolie. Die Schicht 12 besteht in diesem Beispiel aus 90 Gew.-% HDPE (GM 9240 von der Basell Polyolefine GmbH, Am Yachthafen 2, D-77694 Kehl, Deutschland) und 10 Gew.-% Flammhemmer (Clariant® PEA0025586 FH von der Clariant Masterbatch GmbH & Co. OHG, Hohenrhein 1, D-56112 Lahnstein, Deutschland oder alternativ FR Mastertrek® PE 373115 der Firma Campine, Vetrieb über die Helm AG, Nordkanalstrasse 28, D-20097 Hamburg, Deutschland), wobei die Gewichtsprozentsätze auf das Gesamtgewicht der Schicht 12 bezogen sind.

Die Schichten 14a und 14b bestehen aus einer Mischung von 65 Gew.-% LDPE (3020 D oder 3010 D der Firma Basell) und 30 Gew.-% Metallocen-Polyethylen (Elite 5400 von Dow Europe S.A., Bachtobelstrasse 3, CH-8810 Horgen, Schweiz) und 5 Gew.-% des obenerwähnten Flammhemmers, wobei die Gewichtsprozentsätze auf das Gesamtgewicht der Schicht 14a bzw. 14b bezogen sind. Die Schicht 12 weist eine Dikke von 90 µm bis 130 µm auf, und die Schichten 14a und 14b weisen jeweils eine Dicke von 25 µm bis 45 µm auf, wobei die Gesamtdicke der Basisfolie 180 µm beträgt.

Die Schichten 16a und 16b bestehen aus aufgedampftem Reinst-Silber (der Reinheit beträgt 99,99 %) und weisen in der vorliegenden Ausführungsform eine Dicke von 60 nm auf.

Die Schichten 18a und 18b sind Schutzlackschichten aus mit Isocyanat gehärtetem Polyurethan-Lack (PUR-Hochglanzlack VH 10117, Zweihorn GmbH, Düsseldorfer Strasse 96-100, D-40721 Hilden, Deutschland), die im Tiefdruckverfahren oder alternativ im Flexodruckverfahren aufgebracht sind. Die Auftragsmenge beträgt trocken je nach Auftragungsverfahren 1,4 bzw. 5,0 g/m².

Die Thermoreflexionsfolie dieses Beispiels erfüllt die Anforderungen an die Baustoffklasse B2.

Was die elektromagnetische Abschirmung dieser Ausführungsform betrifft, werden elektromagnetische Felder im Frequenzbereich von 30 MHz bis 10 GHz um das 300-fache (40 dB) gedämpft.

In einem Verfahren zur Herstellung einer erfindungsgemäßen Thermoreflexionsfolie wird zunächst die Basisfolie mit einem Blasfolien- oder Flachfolien-Extrusionsverfahren gebildet. Die Extrusion ist im Fall einer dreilagigen Basisfolie eine Koextrusion. Bei der Extrusion werden beide Seiten der Folie mit einer Korona-Entladung behandelt, um die Haftung auf der Basisfolie zu verbessern. Anschließend wird die so behandelte Folie mit einem Metall, bevorzugt Silber, bedampft und gegebenenfalls werden beide Seiten der mit Metall bedampftenten Folie mit einem Schutzlack versehen. Im Fall einer diffusionsoffenen Folie erfolgt noch ein Perforationsschritt.

Außer im Dachbaubereich kann die Folie z.B. zur Wärmeisolierung von Räumen und als Klebeband für den Bau-Innenund -Außenbereich verwendet werden, wobei die Folie dann einseitig mit einem leitfähigen Kleber versehen wird.

Es wird nun ein erläuterndes, nicht-beschränkendes Beispiel für ein Verfahren zur Herstellung einer bevorzugten erfindungsgemäßen Thermoreflexionsfolie angegeben.

Eine dreilagige Basisfolie, deren mittlere Lage aus 90 Gew.-% HDPE und 10 Gew.-% Flammhemmer besteht und deren beiden äußeren Lagen aus einem Blend von 65 Gew.-% LDPE, 30 Gew.-% LLDPE oder Metallocen-Polyethylen und 5 Gew.-% Flammhemmer bestehen, wird in einem Blasfolienverfahren koextrudiert.

Die Temperatur in den Extrudern für die beiden äußeren Lagen der Basisfolie liegt zwischen 190 und 200°C. Im mittleren Extruder, in dem die Hauptkomponente ein HDPE ist, liegt die Temperatur bei 220 bis 240°C.

Der Ausstoß bei der Extrusion der Folie beträgt bei einer Gesamtdicke von 180 µm 300 bis 360 kg/h. Die Abzugsgeschwindigkeit beträgt bei einer 180 µm-Folie 11,0 - 12,5 m/min.

Beide Seiten der extrudierten Folie werden einer KoronaBehandlung unterzogen, um bei der weiteren Bearbeitung der Folie die Haftung zu verbessern. Es muss darauf geachtet werden, dass die Basisfolie nicht später auf der Mutterrolle verblockt und damit eine Weiterverarbeitung der Basisfolie unmöglich wird.

Die Folienrollen werden in einer evakuierbaren Anlage umgewickelt und dabei mit Silber bedampft. Der Prozess erfolgt halbkontinuierlich. Die Basisfolie wird auf beiden Seiten metallisiert, was je nach Anlage in einem Arbeitsgang oder in zwei Arbeitsgängen erfolgen kann. Die Verdampfung des Silbers erfolgt in einem System von Schiffchen aus halbleitendem Werkstoff. Diese werden direkt durch Strom erhitzt. Das Silber wird als Draht direkt von der Rolle zugefügt, in den Schiffchen geschmolzen und dann als Dampf auf die Folie übertragen. Dazu ist ein Hochvakuum von etwa 10⁻⁴ mbar erforderlich.

Die Menge des auf der Basisfolie niedergeschlagenen Silbers wird durch die Temperatur und die Durchzugsgeschwindigkeit bestimmt, die so eingestellt werden, dass die Silberbeschichtungsstärke auf jeder Seite 60 nm beträgt.

Um die Metallisierung der Basisfolie zu schützen, wird nun ein Schutzlack aufgetragen. Hierbei handelt es sich in diesem Beispiel um den oben erwähnten Zweikomponenten-Polyurethan/Isocyanat-Lack. Die beiden Komponenten, die in organischem Lösungsmittel vorliegen, werden unmittelbar vor dem Auftragen in einem Verhältnis 2 Gew.-Teile Polyurethan: 1 Gew.-Teil Isocyanat gemischt, und die Mischung wird in einem Tiefdruckverfahren oder Flexodruckverfahren in zwei Arbeitsgängen, für jede Seite der Folie einen, in einer Tief- oder Flexodruckanlage so aufgebracht, dass seine Auftragsmenge nach dem Trocknen und dem zur Härtung und optimalen Vernetzung zur Metallisierung erforderlichen Erwärmen 1,4 - 5,0 g/m² beträgt. Das Erwärmen kann beispielsweise mit Heißluft oder mit Infrarotstrahlung durchgeführt werden.

Für die Herstellung einer diffusionsoffenen Thermoreflexionsfolie wird die Folie im Anschluß durch eine Laser-Perforationseinheit geführt. Mit Hilfe eines UV-Lasers (Power-Gator UV-Laser (grün), 15 W, von Lambda Physiks, Göttingen, Deutschland) werden Perforationen mit einem Durchmesser von 10 µm bis 20 µm in die Folie gebrannt. Eine hochdiffusionsoffene Folie wird mit etwa 62 000 Perforationen/m² versehen. Die Perforation wird so durchgeführt, daß bis auf einen Randbereich von 10 bis 20 mm, der unperforiert verbleibt, eine komplette Perforation stattfindet.

## Patentansprüche

1. Thermoreflexionsfolie für den Baubereich mit einer Basisfolie, die Polyethylen umfasst und beidseitig eine aufgedaimpte Metallisierungsschicht aufweist, **dadurch gekennzeichnet, dass** über beiden Metallisierungsschichten ein Schutzlack aufgetragen ist.

2. Thermoreflexionsfolie nach Anspruch 1, **dadurch gekennzeichnet, dass** die Thermoreflexionsfolie diffusionsgeschlossen ist.

3. Thermoreflexionsfolie nach Anspruch 1, **dadurch gekennzeichnet, dass** die Thermoreflexionsfolie diffusionsoffen ist.

4. Thermoreflexionsfolie nach Anspruch 3, **dadurch gekennzeichnet, dass** die Diffusionsoffeaheit durch Mikroperforation bereitgestellt ist.

5. Thermoreflexionsfolie nach Anspruch 4, **dadurch gekennzeichnet, dass** eine Mikroperforation einen Durchmesser von 10 µm bis 20 µm aufweist.

6. Thermoreflexionsfolie nach einem der Ansprüche 1 bis 5, **dadurch gekennzeichnet, dass** die Basisfolie einen Flammhemmer enthält.

7. Thermoreflexionsfolie nach Anspruch 6, **dadurch gekennzeichnet, dass** die Basisfolie eine Dicke von 140 µm bis 220 µm aufweist.

8. Thermoreflexionsfolie nach einem der Ansprüche 1 bis 7, **dadurch gekennzeichnet, dass** die Basisfolie dreilagig aufgebaut ist.

9. Thermoreflexionsfolie nach Anspruch 8, **dadurch gekennzeichnet, dass** die mittlere Lage der Basisfolie Polyethylen von höher Dichte (HDPE) aufweist.

10. Thermoreflexionsfolie nach Anspruch 9, **dadurch gekennzeichnet, dass** die mittlere Lage der Basisfolie aus 85-95 Gew.-% HDPE, bezogen auf das Gesamtgewicht der Lage, und 5-15 Gew.-% eines Flammhemmers, bezogen auf das Gesamtgewicht der Lage, besteht.

11. Thermoreflexionsfolie nach Anspruch 9 oder 10, **dadurch gekennzeichnet, dass** die mittlere Lage der Basisfolie eine Dicke von 90 bis 130 µm aufweist.

12. Thermoreflexionsfolie nach einem der Ansprüche 8 bis 11, **dadurch gekennzeichnet, dass** die beiden äußeren Lagen der Basisfolie Polyethylen geringer Dichte (LDPE) und lineares Polyethylen geringer Dichte (LLDPE) oder Metallocen-Polyethylen umfassen.

13. Thermoreflexionsfolie nach Anspruch 12, **dadurch gekennzeichnet, dass** die beiden äußeren Lagen der Basisfolie 50-70 Gew.-% LDPE, 25-40 Gew.-% LLDPE oder Metallocen-Polyethylen und 5-10 Gew.-% eines Flammhemmers enthalten, wobei alle Gewichtsprozente auf das Gesamtgewicht der Lage bezogen sind.

14. Thermoreflexionsfolie nach einem der Ansprüche 12 oder 13, **dadurch gekennzeichnet, dass** die beiden äußeren Lagen jeweils eine Dicke von 25 µm bis 45 µm aufweisen.

15. Thermoreflexionsfolie nach einem der Ansprüche 1 bis 14, **dadurch gekennzeichnet, dass** die Metallisierungsschicht aus Silber besteht.

16. Thermoreflexionsfolie nach einem der Ansprüche 1 bis 15, **dadurch gekennzeichnet, dass** die Metallisierungsschicht eine Dicke von mindestens 60 nm aufweist.

17. Thermoreflexionsfolie nach einem der Ansprüche 1 bis 16, **dadurch gekennzeichnet, dass** der Schutzlack ein Zweikomponenten-Lack auf der Basis von Polyurethan ist, das mit Isocyanat gehärtet ist.

18. Thermoreflexionsfolie nach Anspruch 17, **dadurch gekennzeichnet, dass** der Dispersionslack in einer Trokkenmenge von 1,4 bis 5,0 g/m² aufgebracht ist.

19. Thermoreflexionsfolie nach einem der Ansprüche 6 bis 18, **dadurch gekennzeichnet, daß** sie der Baustoffklasse B2 nach DIN 4102/1:1998/05 genügt.

20. Thermoreflexionsfolie nach einem der Ansprüche 1 bis 19, **dadurch gekennzeichnet, daß** sie winddicht und wasserfest (Regen- und Schlagregen-beständig), emissionsfrei, hoch reißfest, hoch UV-beständig, lichtdicht, wärmereflektierend und von -45°C bis +95°C temperaturbeständig ist und hervorragende elektromagnetische Abschirmungseigenschaften über einen breiten Temperatur- und Frequenzbereich besitzt.

21. Verfahren zur Herstellung einer Thermoreflexionsfolie nach Anspruch 1, mit den Schritten:
a) Extrudieren einer Basisfolie, die Polyethylen umfasst, mit einem Blasfolien- oder Flachfolien-Extrusionsverfahren;
b) Behandeln beider Seiten der in a) erhaltenen Folie mit einer Korona-Entladung;
c) beidseitiges Bedampfen der in b) erhaltenen, behandelten Folie mit einem Metall, vorzugsweise Silber; und
d) beidseitiges Versehen der in Schritt c) erhaltenen, mit Metall bedampften Folie mit einem Schutzlack.

22. Verfahren nach Anspruch 21, **dadurch gekennzeichnet, dass** in Schritt a) eine dreilagige Basisfolie koextrudiert wird, wobei die mittlere Lage HDPE umfasst und die beiden äußeren Lagen LDPE und LLDPE oder Metallocen-Polyethylen umfassen.

23. Verfahren nach Anspruch 21 oder 22 zur Herstellung einer diffusionsoffenen Folie nach Anspruch 3, **dadurch gekennzeichnet, dass** in einem Schritt e) die Folie aus dem Schritt c) oder d) des Anspruchs 21 oder 22 perforiert wird.

24. Verwendung der Thermoreflexionsfolie nach einem der Ansprüche 1 bis 20 als Unterspannbahn.

25. Verwendung der Thermoreflexionsfolie nach einem der Ansprüche 1 bis 20 als Klebeband, wobei die Folie einseitig mit einem elektrisch leitenden Kleber versehen ist, im Bau-Innen- und Außenbereich.

## Claims

1. Thermal reflective sheeting for the building industry with a polyethylene-containing base sheeting and a vacuum metallized metallization coat on both sides, **characterized by** a protective coat on top of both metallization coats.

2. Thermal reflective sheeting following claim 1, **characterized by** the fact that the thermal reflective sheeting is diffusion-resistant.

3. Thermal reflective sheeting following claim 1, **characterized by** the fact that the thermal reflective sheeting is diffusion-permitting.

4. Thermal reflective sheeting following claim 3, **characterized by** the fact that the diffusion-permitting appearance is created by microperforation.

5. Thermal reflective sheeting following claim 4, **characterized by** microperforations with a diameter between 10 µm and 20 µm.

6. Thermal reflective sheeting following one of claims 1 through 5, **characterized by** the fact that the base sheeting contains a flame retardant.

7. Thermal reflective sheeting following claim 6, **characterized by** a thickness of the base sheeting of 140 µm to 220 µm.

8. Thermal reflective sheeting following one of claims 1 through 7, **characterized by** a base sheeting composed of three layers.

9. Thermal reflective sheeting following claim 8, **characterized by** a base sheeting with a center layer of high-density polyethylene (HDPE).

10. Thermal reflective sheeting following claim 9, **characterized by** a base sheeting with a center layer composed of 85 - 95 percent in weight of HDPE, referred to the total weight of the layer, and 5 - 15 percent in weight of flame retardant, referred to the total weight of the layer.

11. Thermal reflective sheeting following claim 9 or 10, **characterized by** a base sheeting with a center layer with a thickness of 90 to 130 µm.

12. Thermal reflective sheeting following one of claims 8 through 11, **characterized by** the fact that both exterior layers of the base contain low-density polyethylene (LDPE) and linear low-density polyethylene (LLDPE) or metallocene-polyethylene.

13. Thermal reflective sheeting following claim 12, **characterized by** the fact that both exterior layers of the base sheeting contain 50 - 70 percent in weight of LDPE, 25 - 40 percent in weight of LLDPE or metallocene-polyethylene, and 5 *-* 10 percent in weight of flame retardant. All percentages in weight refer to the total weight of the layer.

14. Thermal reflective sheeting following claim 12 or 13, **characterized by** the fact that both exterior layers have a thickness of 25 µm to 45 µm.

15. Thermal reflective sheeting following one of claims 1 through 14, **characterized by** a metallization coat made of silver.

16. Thermal reflective sheeting following one of claims 1 through 15, **characterized by** a metallization coat with a minimum thickness of 60 nm.

17. Thermal reflective sheeting following one of claims 1 through 16, **characterized by** a two-component protective coat on a polyurethane basis hardened with isocyanate.

18. Thermal reflective sheeting following claim 17, **characterized by** the fact that the dispersion coat is applied in a dry quantity of 1.4 to 5.0 g/m².

19. Thermal reflective sheeting following one of claims 6 through 18, **characterized by** the fact that it meets the requirements of building materials' category B2 following DIN 4102/1:1998/05.

20. Thermal reflective sheeting following one of claims 1 through 19, **characterized by** the fact that it is wind- and waterproof (resistant to rain and downpours), emission-free, highly fissure-resistant, highly UV-resistant, light-proof, heat reflecting, and has a temperature resistance ranging from -45 °C to +95 °C as well as excellent electromagnetic shielding performance over a wide range of temperatures and frequencies.

21. Manufacturing method for thermal reflective sheeting following claim 1, with the following steps:
a) Extrusion of a polyethylene-containing base sheeting by means of a blown film or flat foil extrusion cycle;
b) Treatment of both sides of the sheeting obtained under a) with a corona discharge.
c) Two-sided vapor-depositing of the sheeting obtained under b) with a metal, preferably silver, as well as
d) Application of a protective coat on both sides of the sheeting obtained under c).

22. Manufacturing method following claim 21, **characterized by** the coextrusion of a three-layer base sheeting described in step a), whereby the center layer contains HDPE and both exterior layers contain LDPE or LLDPE.

23. Manufacturing method following claim 21 or 22 for a diffusion-permitting sheeting following claim 3, **characterized by** an additional step e) in which the sheeting obtained in steps c) or d) from claim 21 or 22 are perforated.

24. Use of the thermal reflective sheeting as prestressed subroofing following one of claims 1 through 20.

25. Interior or exterior use of the thermal reflective sheeting following one of claims 1 through 20 as an adhesive tape, whereby one side of the sheeting is coated with a conductive adhesive.

## Revendications

1. Pellicule de thermoréflexion destinée au domaine du bâtiment, ayant une pellicule de base qui comprend du polyéthylène et présente, des deux côtés, une couche de métallisation vaporisée, **caractérisée en ce qu'**une laque protectrice est déposée sur les deux couches de métallisation.

2. Pellicule de thermoréflexion selon la revendication 1, **caractérisée en ce que** la pellicule de thermoréflexion est fermée à la diffusion.

3. Pellicule de thermoréflexion selon la revendication 1, **caractérisée en ce que** la pellicule de thermoréflexion est ouverte à la diffusion.

4. Pellicule de thermoréflexion selon la revendication 3, **caractérisée en ce que** l'ouverture de diffusion est aménagée par microperforation.

5. Pellicule de thermoréflexion selon la revendication 4, **caractérisée en ce qu'**une microperforation présente un diamètre de 10 µm à 20 µm.

6. Pellicule de thermoréflexion selon l'une des revendications 1 à 5, **caractérisée en ce que** la pellicule de base contient un ignifugeant.

7. Pellicule de thermoréflexion selon la revendication 6, **caractérisée en ce que** la pellicule de base présente une épaisseur de 140 µm à 220 µm.

8. Pellicule de thermoréflexion selon l'une des revendications 1 à 7, **caractérisée en ce que** la pellicule de base a une structure en trois couches.

9. Pellicule de thermoréflexion selon la revendication 8, **caractérisée en ce que** la couche médiane de la pellicule de base présente du polyéthylène haute densité (HDPE).

10. Pellicule de thermoréflexion selon la revendication 9, **caractérisée en ce que** la couche médiane de la pellicule de base est constituée de 85 à 95 % en poids de HDPE, par rapport au poids total de la couche, et 5 à 15 % en poids d'un ignifugeant, par rapport au poids total de la couche.

11. Pellicule de thermoréflexion selon la revendication 9 ou 10, **caractérisée en ce que** la couche médiane de la pellicule de base présente une épaisseur de 90 à 130 µm.

12. Pellicule de thermoréflexion selon l'une des revendications 8 à 11, **caractérisée en ce que** les deux couches externes de la pellicule de base comprennent du polyéthylène basse densité (LPDE) et du polyéthylène linéaire basse densité (LLPDE) ou du polyéthylène de métallocène.

13. Pellicule de thermoréflexion selon la revendication 12, **caractérisée en ce que** les deux couches externes de la pellicule de base comprennent 50 à 70 % en poids de LDPE, 25 à 40 % en poids de LLDPE ou de polyéthylène de métallocène et 5 à 10 % en poids d'un ignifugeant, tous les pourcentages en poids se rapportant au poids total de la couche.

14. Pellicule de thermoréflexion selon l'une des revendications 12 ou 13, **caractérisée en ce que** les deux couches externes présentent respectivement une épaisseur de 25 µm à 45 µm.

15. Pellicule de thermoréflexion selon l'une des revendications 1 à 14, **caractérisée en ce que** la couche de métallisation se compose d'argent.

16. Pellicule de thermoréflexion selon l'une des revendications 1 à 15, **caractérisée en ce que** la couche de métallisation présente une épaisseur d'au moins 60 nm.

17. Pellicule de thermoréflexion selon l'une des revendications 1 à 16, **caractérisée en ce que** la laque protectrice est une laque bicomposants à base de polyuréthane qui est durci avec de l'isocyanate.

18. Pellicule de thermoréflexion selon la revendication 17, **caractérisée en ce que** la laque de dispersion est déposée sur une quantité sèche de 1,4 à 5,0 g/m².

19. Pellicule de thermoréflexion selon l'une des revendications 6 à 18, **caractérisée en ce qu'**elle satisfait à la catégorie des matériaux de construction B2 d'après la norme DIN 4102/1:1998/05.

20. Pellicule de thermoréflexion selon l'une des revendications 1 à 19, **caractérisée en ce qu'**elle est étanche au vent et résistante à l'eau (résistante à la pluie et à la pluie battante), dépourvue d'émission, hautement résistante à l'arrachage, hautement résistante aux U.V., étanche à la lumière, réfléchissante à la chaleur et résistante à des températures de -45°C à +95°C et possède des propriétés écran des ondes électromagnétiques exceptionnelles sur une large plage de températures et de fréquences.

21. Procédé de fabrication d'une pellicule de thermoréflexion selon la revendication 1, comportant les étapes
a) d'extrusion d'une pellicule de base, comprenant du polyéthylène, avec un procédé d'extrusion de pellicules par soufflage ou d'extrusion de pellicules à plat ;
b) de traitement des deux faces de la pellicule obtenue au a) avec une décharge corona ;
c) de vaporisation des deux côtés de la feuille traitée, obtenue au b), avec un métal, de préférence l'argent ; et
d) de dotation sur les deux faces de la pellicule vaporisée de métal, obtenue à l'étape c), d'une laque protectrice.

22. Procédé selon la revendication 21, **caractérisé en ce que**, à l'étape a), une pellicule de base à trois couches est extrudée, la couche médiane comprenant du HDPE et les deux couches externes comprenant du LDPE et du LLDPE ou du polyéthylène de métallocène.

23. Procédé, selon la revendication 21 ou 22, de fabrication d'une pellicule ouverte à la diffusion, selon la revendication 3, **caractérisée en ce que**, à l'étape e), la pellicule de l'étape c) ou d) de la revendication 21 ou 22 est perforée.

24. Utilisation de la pellicule de thermoréflexion, selon l'une des revendications 1 à 20, à titre de bande de revêtement intérieur.

25. Utilisation de la pellicule de thermoréflexion selon l'une des revendications 1 à 20, à titre de bande collante, la pellicule étant dotée d'une colle électriquement conductrice sur une face, dans le domaine intérieur et extérieur du bâtiment.
